# EUROPEAN PATENT APPLICATION

(11) **EP 1 341 353 A1**
(43) Date of publication of application: **03.09.2003**
(21) Application number: 02290499.9
(22) Date of filing: 28.02.2002
(51) Int. Cl.: H04L 25/14, H04J 14/02

(54) **Transmitter, receiver and method for reordering of multiplexed data streams**

(71) Applicant: Corvis Algety, 22300 Lannion (FR)
(72) Inventor: Pamart, Jean-Luc, 22560 Pieumeur Bodou (FR); Borgne, Eric, 22700 Louannec (FR)
(74) Representative: Ahner, Francis

(57) **Abstract**

Transmitter and receiver allowing at the receiver side a simplified processing to combat circular shifts of the data stream. In the transmitter, the data is demultiplexed and non-sequentially distributed to encoders with multiple inputs and outputs. A multiplexer sequentially joins the data streams outputted from the differents encoders to form a single data flow.

The receiver demultiplexes the received flow allowing for circular permutations in case the receiver data is misaligned. This way, data sequence can be reestablished.

## Description

### Field of the invention

The present invention relates methods, systems, and apparatuses utilizing forward error correction and, more particularly, to forward-error-correction with non-sequential interleaving.

### Background of the invention

When data are transmitted over a communication systems, errors due to changes in the characteristics of the channels occur during the propagation. To correct these errors and to improve WDM transmission systems, it has been known to use forward error correction coding (FEC).

The basic principle of this method is to encode the data being transmitted at the emitting site and to decode the transmitted data at the receiving side. A redundancy of parity is introduced into the coding. The reception site uses this information of parity to detect the errors and to correct them.

In order to encode and decode the data, a single data stream is often time division demultiplexed into several lower bit rate streams, those lower bit rate streams are encoded or decoded, and the lower bit rate encoded or decoded data streams are time division multiplexed into a single data stream. The prior art teachings treat the data streams in a sequential manner. As a result, proper realignment of a data stream at the receiving site depends on identifying the starting point of the stream, but it is often difficult to know where the starting point of the data stream will be found. Thus, the prior teachings are deficient because they are difficult to implement in real world situations.

### Brief Summary of the Present Invention

The present invention is directed to systems, apparatuses, and methods for encoding, transmitting, and decoding data streams. One embodiment of the present invention is a forward error correction encoding transmitter including a time division demultiplexer, at least two forward error encoders each having at least two input ports and each having at least two corresponding output ports, and a time division multiplexer. The output ports of the time division demultiplexer are non-sequentially interleaved to the input ports of the encoders and the output ports of the encoders are sequentially interleaved to the input ports of the time division multiplexer. In other words, the transmitter has x encoders, wherein x is an integer greater than one, and wherein each encoder is connected to every x^{th} output port of the demultiplexer. For example, if the demultiplexer has sixteen output ports and there are four encoders, x equals four, and the first encoder may be connected to output ports 0, 4, 8, and 12 of the demultiplexer, the second encoder may be connected to output ports 1, 5, 9, and 13, and so on. The data signals may be further demultiplexed, such as in the encoders or outside of the encoders.
Another embodiment of the present invention is a forward error correction decoding receiver including a time division demultiplexer, at least two forward error decoders each having at least two input ports and each having at least two corresponding output ports, and a time division multiplexer. The output ports of the time division demultiplexer are non-sequentially interleaved to the input ports of the decoders and the output ports of the decoders are sequentially interleaved to the input ports of the time division multiplexer, in a manner analogous to that of the transmitter. The decoders may be connected to each adjacent decoder via a data line to allow for circular permutations in the event the data is not received properly. In other embodiment, each decoder is connected to a common data line which is used to communicate between the decoders, such as to synchronize the decoders, or to communicate other control signals, such as from a controller. Other embodiments of the present invention include systems utilizing the transmitters and receivers of the present invention, and methods utilizing the present invention.

In accordance with the present invention, systems, apparatuses, and methods are disclosed for decoding the data streams at the receiving site in an easy, simple and low cost manner. The decoding method is independent of the starting point or proper alignment of the data stream, thereby allowing for much greater flexibility and lower cost than comparable prior art systems..

### Detailed Description of the Invention

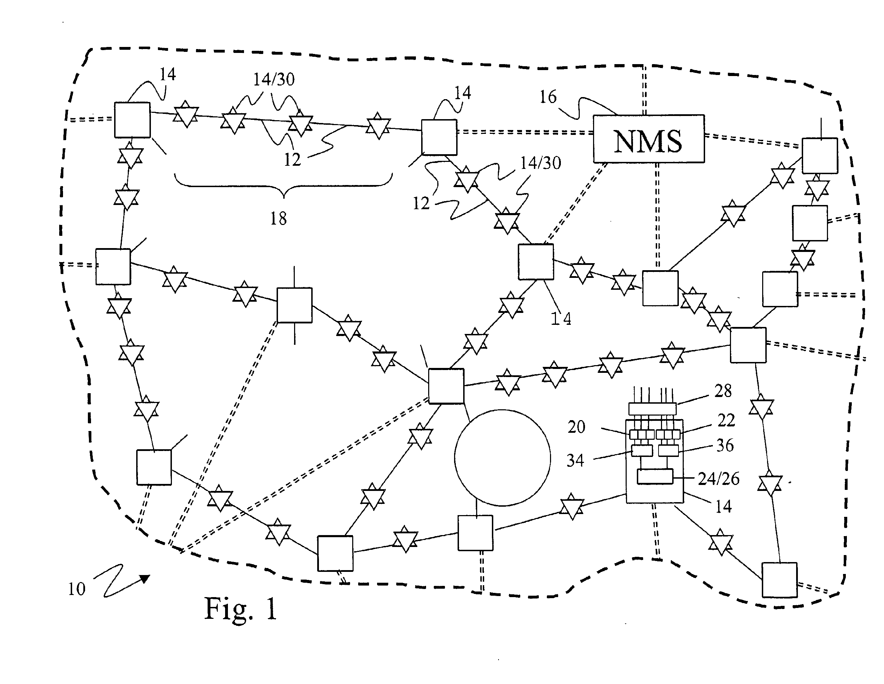

Fig. 1 illustrates an optical communications system 10 which includes optical paths 12 connecting nodes and network elements 14. Advantages of the present invention can be realized with many system 10 configurations and architectures, such as an all optical network, one or more point to point links, one or more rings, a mesh, other architectures, or combinations of architectures. The system 10 illustrated in Fig. 1 is a multi-dimensional network, which can be implemented, for example, as an all optical mesh network, as a collection of point to point links, or as a combination of architectures. The system 10 can employ various signal formats, and can also convert between formats. The system 1O can also include more or less features than those illustrated herein, such as by including or deleting a network management system ("NMS") 16 and changing the number, location, content, configuration, and connection of nodes 14.

The optical paths 12 can include guided and unguided transmission media, such as one or more optical fibers, ribbon fibers, planar devices, and free space devices, and can interconnect the nodes 14 providing optical communication paths through the system 10. Various types of transmission media can be used, such as dispersion shifted ("DSF"), non-dispersion shifted ("NDSF"), non-zero dispersion shifted ("NZDSF"), dispersion compensating ("DCF"), polarization maintaining ("PMF"), single mode ("SMF"), multimode ("MMF"), other types of transmission media, and combinations of transmission media. Furthermore, the transmission media can be doped, such as with erbium, germanium, neodymium, praseodymium, ytterbium, other rare earth elements, other dopants, and mixtures thereof. The paths 12 can carry one or more uni- or bi-directionally propagating optical signal channels or wavelengths. The optical signal channels can be treated individually or as a single group, or they can be organized into two or more wavebands or spectral groups, each containing one or more optical signal channel. One or more paths 12 can be provided between nodes 14 and can be connected to protection switching devices and/or other redundancy systems. The optical path 12 between adjacent nodes 14 is typically referred to as a link 18, and the optical path 12 between adjacent components along a link 18 is typically referred to as a span.

The nodes and network elements 14 can include one or more signal processing devices including one or more of various optical and/or electrical components. The nodes 14 can perform network functions or processes, such as switching, routing, amplifying, multiplexing, combining, demultiplexing, distributing, or otherwise processing optical signals. For example, nodes 14 can include one or more transmitters 20, receivers 22, switches 24, add/drop multiplexers 26, amplifiers 30, interfacial devices 28, multiplexers/combiners 34, and demultiplexers/distributors 36, as well as filters, dispersion compensating and shifting devices, monitors, couplers, splitters, and other devices. One embodiment of one node 14 is illustrated in Fig. 1, although the nodes 14 can have many other variations and embodiments.

The NMS 16 can manage, configure, and control nodes 14 and can include multiple management layers that can be directly and indirectly connected to the nodes 14. The NMS 16 can be directly connected to some nodes 14 via a data communication network (shown in broken lines) and indirectly connected to other nodes 14 via a combination of a directly connected node and communications paths in the optical system 10. The data communication network can, for example, be a dedicated network, a shared network, or a combination thereof. A data communications network utilizing a shared network can include, for example, dial-up connections to the nodes 14 through a public telephone system. The NMS 16 can reside at one or more centralized locations and/or can be distributed among components in the system 10. Mixed data or supervisory channels can be used to provide connections between the network elements of the NMS 16, which can be located in nodes 14 or remote from nodes 14. The supervisory channels can be transmitted within and/or outside the signal wavelength band and on the same medium or a different medium than the wavelength band.

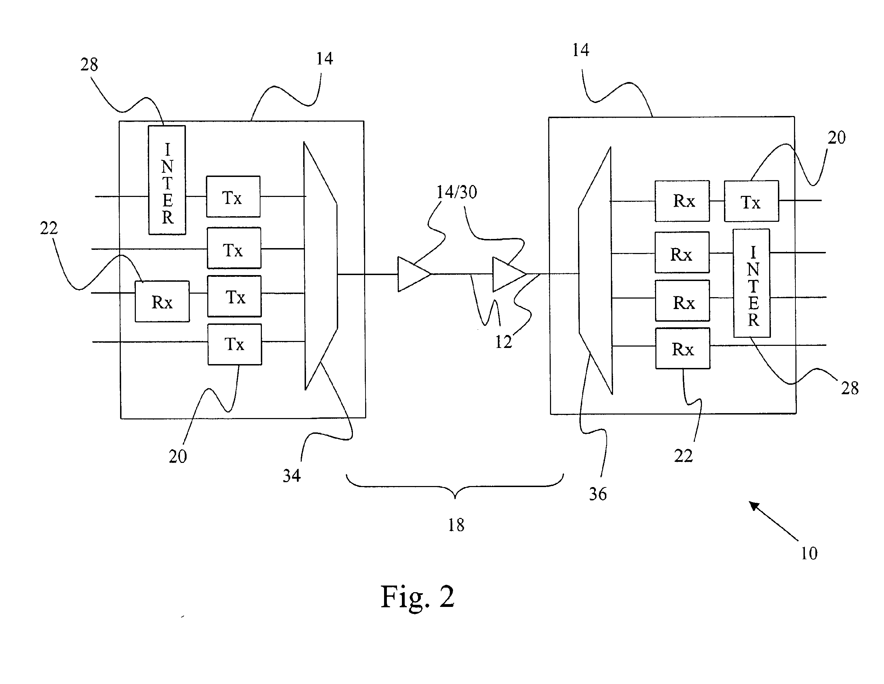

Fig. 2 illustrates another embodiment of the system 10 including a link 18 of four nodes 14. That system 10 can, for example, be all or part of a point to point system 10, or it may be part of a multi-dimensional, mesh, or other system 10. One or more of the nodes 14 can be connected directly to the network management system 16 (not shown). If the system 10 is part of a larger system, then as few as none of the nodes 14 can be connected to the network management system 16 and all of the nodes 14 can still be indirectly connected to the NMS 16 via another node in the larger system 10.

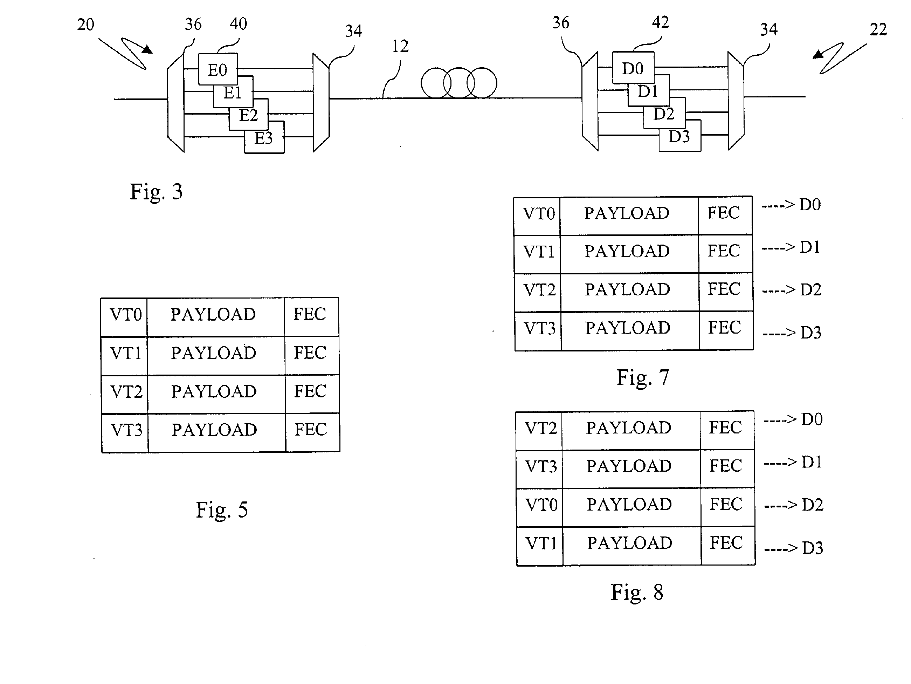

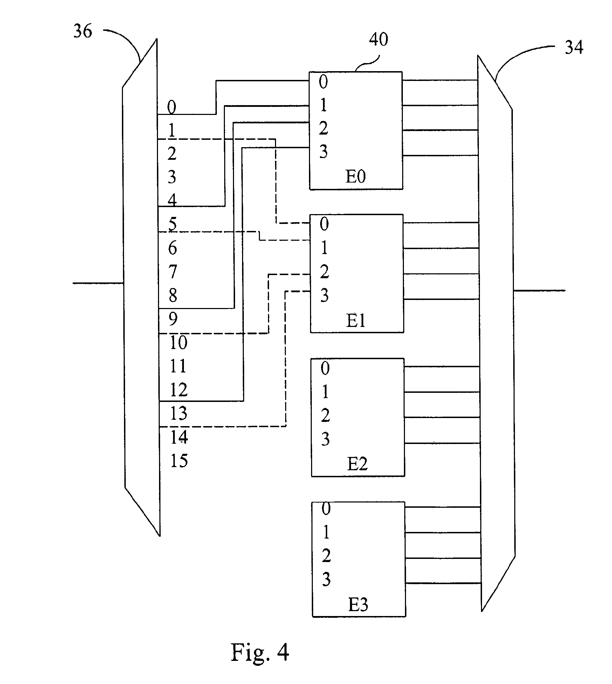

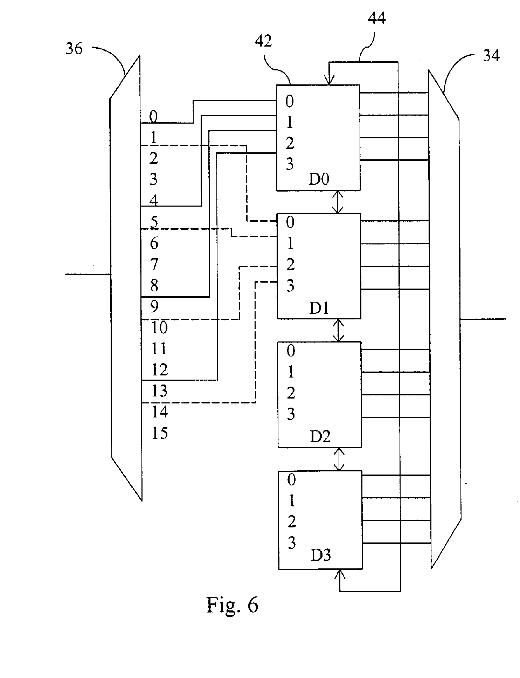

Fig. 3 illustrates a transmitter 20 and receiver 22 using encoders 40 and decoders 42 for forward error correction ("FEC"). For example, a 10 Gbit/second unencoded data stream is time division demultiplexed, or deserialized, into several, lower rate data streams. Each lower rate data stream is encoded with FEC codes and/or other data, thereby adding overhead to the signal and increasing the data rate. The encoded data streams are time division multiplexed, or serialized, together. This typically results in a data rate of about 10.6 Gbits/second when conventional Reed-Solomon FEC codes are used with 10 Gbits/second data streams, although other variants of Reed-Solomon FEC codes and FEC codes other than Reed-Solomon may be utilized with the present invention. The inverse process occurs at the receiver, whereby the data is decoded, errors are corrected using the FEC codes, and the data is reassembled and retransmitted at the original, unencoded data rate. The invention is described in terms unencoded data streams at 10 Gbit/second, although advantages of the present invention may be applied to other data rates, such as 2.5 Gbits/second, 40 Gbit/second, and other data rates. Similarly, the invention will be described in terms of data being organized into four groups, corresponding to four FEC encoders 40 and four FEC decoders 42, although more or less groups of data, encoders 40, and decoders 42 may be used with the present invention.

Fig. 4 illustrates one embodiment of the FEC encoding portion of the transmitter 20. The unencoded data stream is demultiplexed into several parallel data streams. Those data streams are interleaved in a non-sequential order between several encoders 40, labeled E0-E3. In the illustrated embodiment, there are four encoders 40, so the demultiplexed data stream is interleaved so that every fourth data stream is interleaved to the same module. In other words, data streams at output ports 0, 4, 8, and 12 of the demultiplexer 36 are interleaved to the first encoder E0, data streams at output ports 1, 5, 9, and 13 of the demultiplexer 36 are interleaved to the second encoder E1, etc. For clarity, connections are not shown to encoders E2 and E3, although those connections would be made in a manner consistent with the connections to encoders E0 and E1. Furthermore, although the present invention is described in terms of four data streams to each of four encoders 40, more or less data streams may be provided to each encoder 40, and more or less encoders 40 may be used. Furthermore, the data streams may be time division demultiplexed more than once. For example, in the illustrated embodiment the demultiplexer 36 demultiplexes the signal into sixteen lower bit rate data streams, each of which may be further demultiplexed before being encoded with forward error correction codes, such as by successive 1:8 and 1:2 demultiplexers to provide a total of 256 data streams. Each encoder 40 adds overhead to the data stream, such as the FEC codes, frame lock or framing structure data, etc., and provides the encoded data streams to a time division multiplexer 34, which combines the data streams into a single, higher rate, encoded data stream.

The encoded data stream is organized into a data frame which may have a general format such as that illustrated in Fig. 5. That frame is organized into four groups, with each group including frame lock or framing structure overhead ("VTn") for use in realigning the groups into the proper order within the frame, the payload data, and FEC overhead for error correction. Other overhead may also be added, and the format may be rearranged to suit particular applications.

Fig. 6 illustrates one embodiment of the FEC decoding portion of the receiver 22, which is analogous to the encoding portion illustrated in Fig. 4. The encoded data stream is time division demultiplexed, or deserialized, into several parallel data streams, which are interleaved in a non-sequential manner to several decoders. The decoders 42 may perform several functions, including FEC error correction. The decoders 42 are connected to each other via data lines 44 so that data can be transferred between the decoders, as described below. The data line 44 is illustrated as connecting each decoder 42 with each of the adjacent decoders 42, so as to allow for circular permutations of data received by the decoders 42. In other embodiments, the data line 44 can connect each decoder 42 with every other decoder 42 to allow for more sophisticated data permutations.

When the data stream arrives at the reception site, it is demultiplexed into four groups, each group being received by one decoder 42. One of the functions of the decoders 42 is to detect the order of the data arriving at the decoder inputs, to compare them with a table showing possible combinations, and to realign the data if they are out of order. To be more precise, each decoder Dn checks the frame lock or framing structure data VTn and determines if that decoder is receiving the portion of the data that it expects to receive. For example, in the illustrated embodiments, D0 expects to receive VT0, D expects to receive VT1, etc. The decoders can communicate with each other, and if the data is not properly ordered, e.g., if decoder D0 receives the data associated with VT2, the decoders can perform a circular permutation of data via the data lines 44 to reorder or realign the data. Fig. 7 illustrates a combination of frame structure data VTn corresponding to the data stream received by each of the decoders Dn. In that example, the data is properly ordered when it is received by the decoders and re-ordering is not required. Fig. 8 illustrates another example, in which the data is not properly ordered, and in that situation the decoders will realign the data via the data lines. This realignment is temporal.

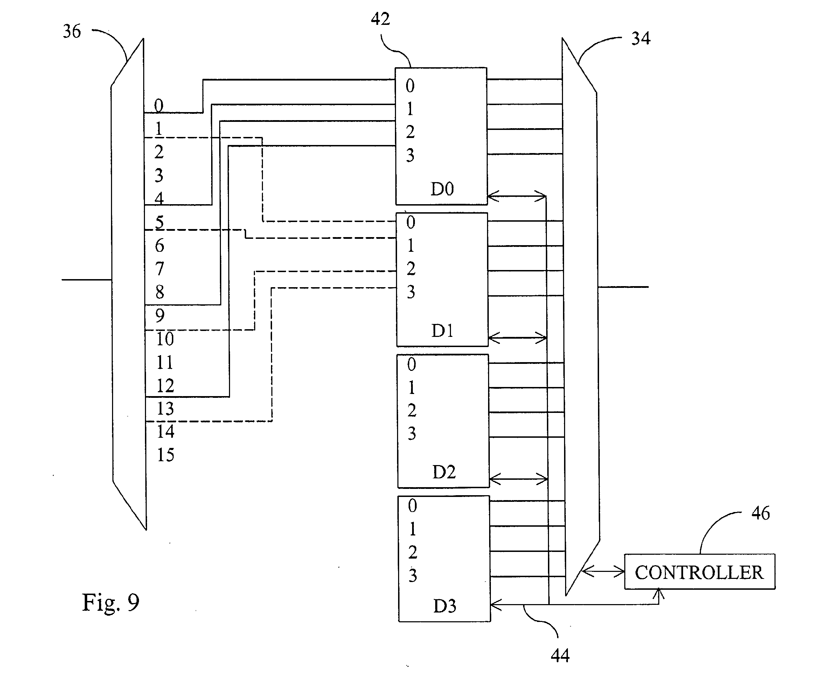

Fig. 9 illustrates another embodiment of the FEC decoding portion of the receiver. In that embodiment, each decoder (Dn) checks the frame lock or framing structure data (VTn) and the decoder which has received the data associated with VT0 becomes a master decoder, and the remaining decoders become slave decoders. The master decoder transmits a pulse via the data line 44 to the slave decoders to synchronize the decoders. The multiplexer performs a natural permutation to properly arrange the data, and a circular permutation is not necessary in the decoders.

More specifically, the multiplexer does not know which decoder is the master decoder with VT0. The decoder can start at a predetermined input, typically input 0, and sequentially read all of the inputs from the decoders. When the beginning of the data stream is detected, the data stream is read and a complete cycle through the multiplexer is performed, starting with the point at which the beginning of the data stream is detected. In that manner, the data is re-ordered in the event it is not received as it is expected.

The actions of the decoders 42 and the multiplexer 34 are coordinated. In one embodiment, control signals to the decoders 42, typically clock signals, are controlled by the multiplexer 34. In another embodiment, a separate controller 46 may be used to control and coordinate the control signals to the decoders 42 and the cycling of the multiplexer 34.

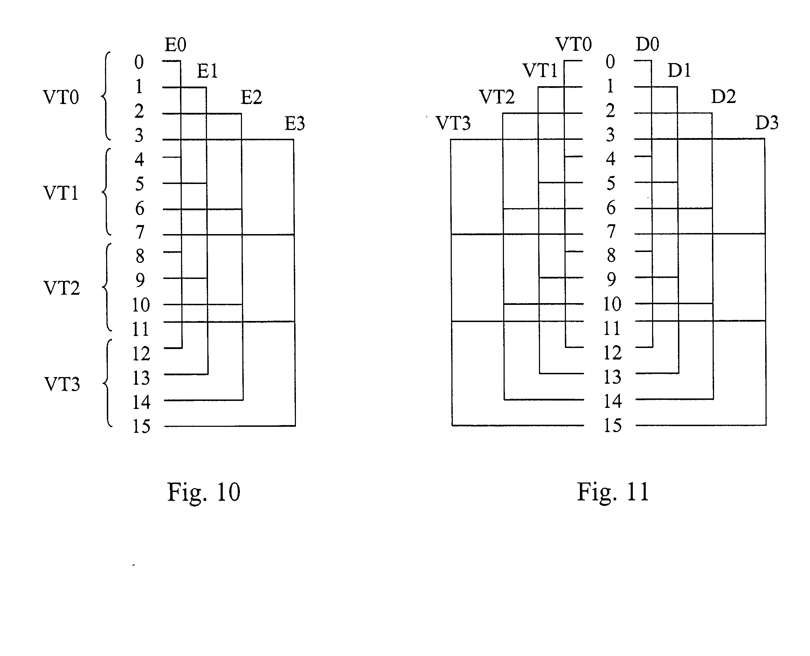

Several examples of the non-sequential ordering of the data streams according the present invention will now be presented to illustrate the present invention. Fig. 10 illustrates how the data may be interleaved according to the present invention at the FEC transmitter 20. In that example, the data is shown as it would appear at the output ports (0-15) of the transmitter demultiplexer 36. The first group of data corresponding to VT0 appears at output ports 0-3, the second group corresponding to VT1 appears at output ports 4-7, etc. Encoder E0 is provided with data from output ports 0, 4, 8, and, 12. Encoder E1 is provided with data from output ports 1, 5, 9, and 13. Encoders E2 and E3 are provided with data in an analogous manner.

Fig. 11 illustrates how the data is interleaved at the FEC receiver 22. In that example, decoder D0 is provided with the data from output ports 0, 4, 8, and 12. Decoder D1 is provided with data from output ports 1, 5, 9, and 13. Decoders D2 and D3 are provided with data in an analogous manner. The example illustrated in Figs. 10 and 11 shows the data being received in the manner in which it is expected, with VT0 being received by encoder E0 and corresponding decoder D0, VT1 being received by encoder E0 and corresponding decoder D1, etc.

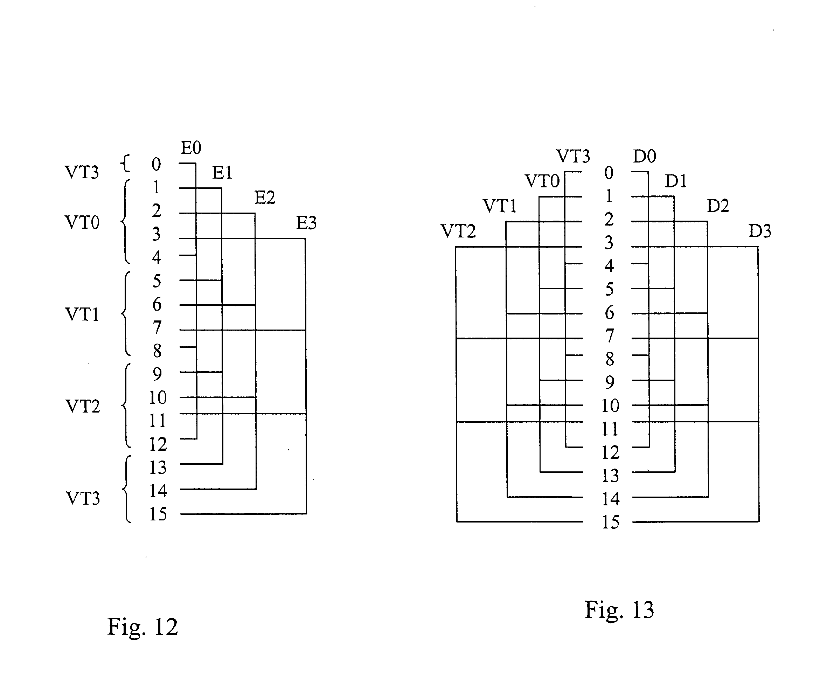

Figs. 12 and 13 illustrate another example in which the data is not received in the manner in which it is expected. In that example, data alignment is shifted by one place so that demultiplexer 36 output ports 0-3 provide one fourth of VT3 and three fourths of VT0. Similar mixing of data occurs at the other output ports. Prior art teachings which show sequential interleaving of data will result in mixed data groups at the encoders 40 and at the decoders 42. The present invention, however, maintains the data in complete groups regardless of the data alignment.

Fig. 12 illustrates that the non-sequential interleaving results in encoder E0 receiving data corresponding to VT3, encoder E1 receiving data corresponding to VT0, etc. Although the encoders 40 do not receive the data groups they expect, they do receive complete groups.

Fig. 13 illustrates that the FEC receiver 22 corresponding to the transmitter 20 illustrated in Fig. 12 receives that data, and the non-sequential interleaving of data results in each decoder 40 receiving complete groups of data. In this example, the decoders 40 do not receive the data groups that they expect to receive. However, the data groups are complete and they can be easily arranged in the proper order using a circular permutation or other reordering techniques, such as those described above.

The present invention allows data misalignment to be more easily corrected than in prior art teachings. In contrast, prior art teaching using sequential interleaving of data often results in each encoder receiving a portion of one group (e.g., VT0) and a portion of another group (e.g., VT1), thereby requiring additional processing to correct errors and properly regroup the data.

## Claims

1. A forward error correction encoding transmitter including a time division demultiplexer having an input port and at least four output ports, at least two forward error encoders, each encoder having at least two input ports and each encoder having at least two corresponding output ports, and a time division multiplexer having at least four input ports and an output port, wherein the invention comprising:
the output ports of the time division demultiplexer are non-sequentially interleaved to the input ports of the encoders and the output ports of the encoders are sequentially interleaved to the input ports of the time division multiplexer.

2. The transmitter of claim 1, wherein the transmitter includes x encoders, wherein x is an integer greater than one, and wherein each encoder is connected to every x^{th} output port of the demultiplexer.

3. The transmitter of claim 2, wherein each encoder includes time division demultiplexers to further demultiplex data streams received by the encoders into lower bit rate data streams.

4. The transmitter of claim 3, wherein a single data stream received by the time division demultiplexer is demultiplexed into a total of 256 data streams within the encoders.

5. A forward error correction decoding receiver including a time division demultiplexer having an input port and at least four output ports, at least two forward error decoders, each decoder having at least two input ports and each decoder having at least two corresponding output ports, and a time division multiplexer having at least four input ports and an output port, wherein the invention comprising:
the output ports of the time division demultiplexer are non-sequentially interleaved to the input ports of the decoders and the output ports of the decoders are sequentially interleaved to the input ports of the time division multiplexer.

6. The receiver of claim 5, wherein the receiver includes x decoders, wherein x is an integer greater than one, and wherein each decoder is connected to every X^{th} output port of the demultiplexer.

7. The receiver of claim 6, wherein each decoder includes time division demultiplexers to further demultiplex data streams received by the encoders into lower bit rate data streams.

8. The receiver of claim 7, wherein a single data stream received by the time division demultiplexer is demultiplexed into a total of 256 data streams within the decoders.

9. The receiver of claim 5, wherein each decoder is connected to each adjacent decoder via a data line.

10. The receiver of claim 9, wherein the decoders determine whether they have received the proper data and the decoders transfer data via the data line to perform a circular permutation in the event the data is not properly received by the decoders.

11. The receiver of claim 5, wherein each decoder is connected to a common data line, and wherein the decoder which receives a data associated with predetermined framing structure data transmits a pulse on the data line to synchronize the other decoders.

12. The receiver of claim 11, wherein the time division multiplexer sends control signals to the decoders.

13. The receiver of claim 12, wherein the control signals are clock signals.

14. The receiver of claim 11, further comprising a controller connected to the time division multiplexer and connected to the decoders, wherein the controller sends control signals to both the decoders and the time division multiplexer.

15. A method of transmitting data signal, comprising:
time division demultiplexing a data signal into several lower bit rate data signals; non-sequentially interleaving the lower bit rate data signals to at least two encoders; encoding the lower bit rate data signals to produce encoded lower bit rate data signals;
sequentially interleaving the encoded lower bit rate data signals;
time division multiplexing the interleaved encoded lower bit rate data signals to produce an encoded, higher bit rate data signal;
transmitting the encoded, higher bit rate data signal;
receiving the encoded, higher bit rate data signal;
time division demultiplexing the data signal into several lower bit rate data signals; non-sequentially interleaving the lower bit rate data signals to at least two decoders; decoding the lower bit rate data signals to produce decoded lower bit rate data signals;
sequentially interleaving the decoded lower bit rate data signals to form sequentially interleaved decoded data signals; and
time division multiplexing the interleaved decoded lower bit rate data signals.

16. The method of claim 15, further comprising:
detecting whether the decoded lower bit rate data signals were received in an expected order; and
performing a circular permutation of data if the decoded lower bit rate data signals are not received in the expected order.

17. The method of claim 15, further comprising:
detecting predetermined framing structure data; and
synchronizing the decoders in response to detecting the predetermined framing structure data.

18. The method of claim 15, further comprising:
sequentially reading the sequentially interleaved decoded data signals; determining a beginning of the sequentially interleaved decoded data signals; and
sequentially time division multiplexing the sequentially interleaved decoded data signals beginning with beginning of the sequentially interleaved decoded data signals.
